(19)

Europäisches Patentamt

European Patent Office

Office européen des brevets

(11) EP 0 478 080 B1

(12) **EUROPEAN PATENT SPECIFICATION**

(45) Date of publication and mention of the grant of the patent: **29.11.2000 Bulletin 2000/48**

(51) Int. Cl.[7]: **H04L 27/38**

(21) Application number: **91202439.5**

(22) Date of filing: **20.09.1991**

# (54) Automatic frequency control device in coherent demodulators for M-QAM modulation systems

Einrichtung zur automatischen Frequenzreglung in kohärenten M-QAM-Demodulatoren

Dispositif de contrôle automatique le fréquence pour démodulateurs cohérents de systèmes à modulation d'amplitude en quadrature

(84) Designated Contracting States:
**DE ES FR GB GR IT SE**

(30) Priority: **28.09.1990 IT 2160790**

(43) Date of publication of application:
**01.04.1992 Bulletin 1992/14**

(73) Proprietor: **Italtel s.p.a.**
**20154 Milano (IT)**

(72) Inventors:

- **Colombo, Roberto**
  **I-20081 Abbiategrasso, Milano (IT)**
- **di Donna, Giambattista**
  **I-20064 Gorgonzola, Milano (IT)**

(74) Representative: **Giustini, Delio**
**c/o Siemens Information and Communication Networks S.p.A.,**
**Cascina Castelletto**
**20019 Settimo Milanese (IT)**

(56) References cited:
**EP-A- 0 098 705** **EP-A- 0 243 589**

- **PATENT ABSTRACTS OF JAPAN vol. 7, no. 243 (E-207)28 October 1983**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 478 080 B1

## Description

The present invention relates to a device for automatic frequency control in coherent demodulators, especially for M-QAM modulation systems.

It is known that to perform coherent demodulation it is necessary to reconstruct in reception a carrier frequency synchronous with that of modulation.

This duty is fulfilled in the demodulator by phase locked loop (PLL) circuits known in the art. The capture band of the PLL, i.e. the frequency interval in which the PLL locks-up the carrier, is however in general very much narrower than the range of variation allowed for the transmission carrier frequency.

To obviate this shortcoming, a method known for some time and still in use because of its simplicity, consists of adding to the voltage of the PLL control signal, a voltage with triangular wave form and amplitude permitting exploration, or sweeping, of the entire range of variation of the carrier. When the frequency generated in the demodulator equals that of the transmission carrier, the PLL locks-up and the triangular signal is deactivated.

A first example of use of said method for enlarging the capture band of the PLL is shown in the EP-A-0243589 document which discloses a PSK, or QAM, coherent demodulator utilizing a PLL for generating a local demodulating carrier. An included sweeping circuit (50) allows to extend the capture range of the PLL. A signal processor (30), based on a Viterbi algorithm, processes the demodulated signal, and detects and corrects bit errors, also producing information about errors. A false lock decision or detection circuit (40) analyzes said error information and, if it decides for unlock, it lets starting the sweeping signal which controls the VCO, and stops it when a lock-up condition is reached. An adder (60) is provided for superimposing the sweeping signal on a phase error signal generated inside the PLL, obtaining a global control signal for the VCO.

A first additional technical problem solved by a demodulator of said first example is that of avoiding the starting of an unwanted sweep even when the PLL is correctly locked. As it's known, this drawback is caused by a high level noise included in the input signal, considered by the error detection circuits as a loss of synchronization of the PLL.

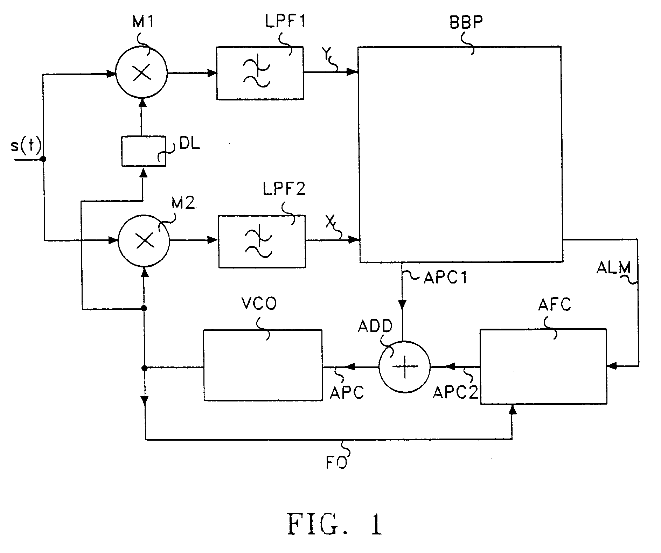

A second example of use the method as above is shown in the EP-A-0098705 document, which discloses a PSK, or QAM, coherent demodulator based on a sweeping PLL. A baseband processing circuit (4) generates both a phase error signal for the control of the VCO (7) and a decision signal b which indicates whether or not the PLL is phase-locked. An adder (5) is provided for superimposing a sweeping signal a on the phase error signal, obtaining a global VCO control signal. Figures 1 and 3 respectively show a prior art sweeping PLL, and a sweeping PLL in conformity with the cited invention.

A second additional technical problem solved by a demodulator of said second example is that of avoiding generation of an unwanted extra sweep component at the time of suspending superimposition of such sweeping signal, giving rise to a disturbance in the PLL. A particular selector circuit (11) memorizes the level of the sweeping signal a just before the phase lock state is achieved, and applies this value at the PLL at the time of achievement of the phase lock.

The big shortcoming of all the above mentioned demodulators is the phase gradient introduced in the PLL, proportional to the sweeping frequency that, if too high, can even prevent locking.

To reduce the phase gradient it is then necessary to reduce the sweeping frequency, but in doing this the locking is slowed, introducing a relock-up delay which is excessive especially with loss of lock-up of short duration, due to the selective fading phenomenon.

Several alternatives are available in the known art for solution of the problem of speeding up lock-up time and can be grouped in virtually three basic categories of automatic frequency control methods (AFC).

- differential AFC;
- AFC with cross product;
- AFC with discrete Fourier transform.

Said known methods are widely discussed in the article of F.

Natali "AFC Tracking Algorithms for Satellite Links", IEEE International Conference on Communications, Boston, 19-22 June 1983, to which reference may be made for a detailed description, and are good automatic frequency control systems in the case of multiple frequency modulations (MFSK) and differential phase modulation (DPSK).

For multi-level quadrature amplitude modulation (M-QAM) these methods have the disadvantage of depending on the form of the spectrum of the received signal. If this spectrum has asymmetries with respect of the carrier frequency, there arises a control signal offset.

In M-QAM modulation systems for medium and high transmission capacities (symbol frequencies greater than 1MHz) the spectrum received can display strong asymmetries which are absent in the transmission emitted spectrum, due to multiple reflections on the transmission channel (selective fading effect). This causes the onset of high offset voltages and hence reception frequency variations greater than the capture band of the PLL, making lock-up of the carrier impossible.

Accordingly the purpose of the present invention is to obviate the above shortcomings and indicate an automatic frequency control device in coherent demodulators, especially for M-QAM modulation systems, having the basic characteristic of being independent of the received signal spectrum form.

The device which is the object of the invention is based on two assumptions:

- loss of lock-up of the carrier is due to atmospheric instability effects on the transmissive means, such as selective fading; such phenomena have short duration (a few seconds);
- search for the carrier frequency becomes necessary following temperature variations in the transmission or reception oscillators; in this case long periods (even several hours) are necessary for the occurrence of appreciable temperature variations.

When the receiver loses the lock-up for short times it is not necessary to carry out carrier search over the entire range of variation since it is reasonable to think that, when the disturbance conditions (selective fading) cease, the frequency of the carrier to be locked-up will have a value very close to that which it had just before loss of the lock-up. Hence, upon occurrence of loss of lock-up due to selective fading the value of the carrier frequency received is memorised; for the entire period of disturbance the frequency of the demodulator oscillator is held near (in the capture band) the memorised value, inhibiting the contribution due to the triangular wave form voltage; upon cessation of the disturbance, the lock-up takes place very rapidly, just because the two carrier frequencies received and reconstructed are already very close together.

But when the receiver loses the lock-up for long periods, the value the carrier frequency received will have at the time of relocking-up cannot be assumed as in the above case, so that there is added to the control signal voltage of the PLL the voltage with triangular wave form, allowing exploration of the entire range of variation of the carrier.

In this manner the lock-up process is speeded as much as possible just in those case when, if the known in the art sum of a triangular wave form were used, the synchronism recovery time would be longer than the duration of the disturbance which brought about the loss of lock-up. The improvement obtained with the circuit of the invention is still more appreciable with fast disturbances which follow each other closely in time; indeed the interval between two successive disturbances would be less than the typical lock-up time of known circuits, inhibiting in practice lock-up for the total period of time of the disturbance. With the circuit which is the object of the invention it is possible to lock-up the carrier between two successive disturbances.

To achieve said purposes the object of the present invention is a device for automatic frequency control in coherent demodulators, especially for M-QAM modulation systems as described in claim 1.

Further purposes and advantages of the present invention will be made clear by the detailed description of an example of an embodiment thereof and the annexed drawings given below by way of nonlimiting example and in which:

FIG. 1 shows a simplified diagram of an M-QAM demodulator comprising an automatic frequency control block which is the object of the invention;
FIG. 2 shows a possible form of embodiment of the circuitry of the automatic frequency control block.

In FIG. 1 the M-QAM demodulator is of known type and comprises the following circuit blocks.

Two normal multipliers M1 and M2 receive at an input the modulated signal s(t) and at a second input a reconstructed carrier signal FO which reaches M1 90° phase shifted by a delay circuit DL.

The outputs of M1 and M2 are filtered in two low-pass filters LPF1 and LPF2 which supply two base band signals, components in phase X and in quadrature Y respectively of the demodulated signal, to a base band processing block BBP of known type and which, not being an object of the present invention, is not further described.

The BBP block emits an alarm signal ALM, whose logic level supplies instantaneous information on the condition of lock-up of the demodulator, and an analog signal APC1 for control of a normal voltage controlled oscillator VCO.

AFC indicates an automatic frequency control block which is the object of the invention and which, on the basis of the frequency value of the reconstructed carrier FO and logic level of the signal ALM, emits an analog signal APC2 which is added in a normal adder ADD to the signal APC1. The sum signal APC is the voltage control signal of the oscillator VCO which generates the reconstructed carrier FO.

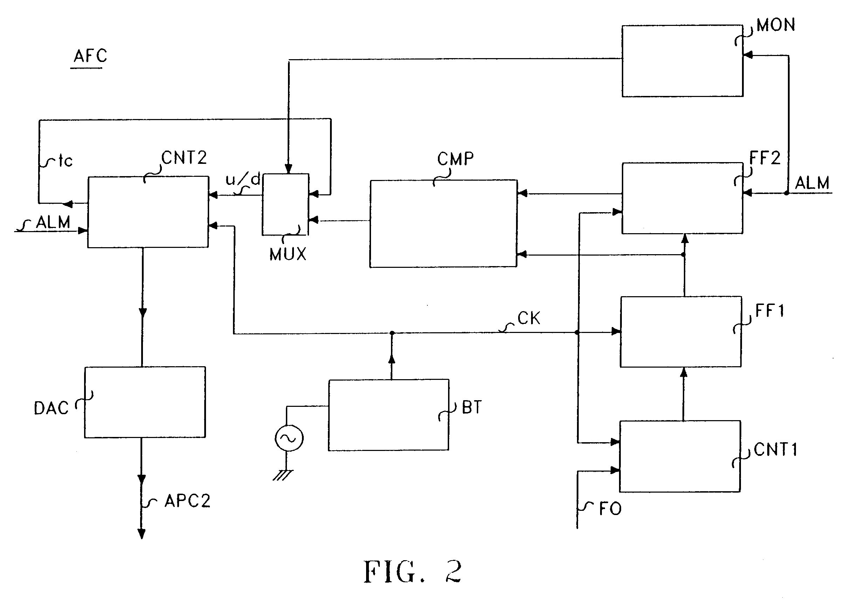

FIG. 2 shows the structure of the block automatic frequency control AFC.

CNT1 indicates a n-bit counter which receives at the clock input the reconstructed carrier FO generated by the VCO (FIG. 1); CNT1 continually counts the cycles of the carrier FO contained in a period of time Tb, which is the period of the signal CK applied at the reset input. The result of each count, which constitutes a measure of the frequency of the carrier FO, is transferred into the block FF1.

FF1 indicates a register with n flip-flops which memorizes each count performed by CNT1 for a period of time Tb.

FF1 receives at the clock input the signal CK.

FF2 indicates a second register with n flip-flops which rememorizes the counts already memorised in FF1 with the same frequency of the signal CK applied at the clock input and which has a hold input to which is applied the alarm signal ALM generated by the block BBP (FIG. 1).

Upon activation of the signal ALM, the last count received from FF1 is frozen in FF2, i.e. the last frequency value FO measured by CNT1 before the rise of the loss of lock-up condition detected by the change of the logic level of signal ALM. The count remains memorised in FF2 for the entire period of activation of the signal ALM (loss of lock-up condition). The count memorised in FF2 is supplied to an input of the block CMP.

CMP indicates a normal n-bit comparator which compares the current count received from the output of FF1 with the count memorised in FF2; the result of the comparison, still present, is supplied to an input of the block MUX.

MON indicates a normal monostable circuit which generates a pulse Ta, of fixed duration and called hereinafter wait time, starting from the instant of activation of the alarm signal ALM applied to its input. The signal generated by MON is supplied to the control input of

MUX indicates a normal multiplexer with two inputs which receives at one input the output of CMP and at a second input the output of CNT2. For the duration of each wait time Ta, MUX supplies to the block CNT2 the result of the comparison of CMP. For the rest of the time MUX connects the input and output of CNT2 together.

CNT2 indicates a normal m-bit up/down counter with: a u/d input for control of the up/down count mode, connected to the output of MUX; a clock input to which is applied the signal CK; an enabling input to which arrives the signal ALM which enables the count during the loss of lock-up condition; an end-of-count output tc which is brought to the second input of MUX, and an m-bit output which carries the count reached and supplied to the block DAC.

DAC indicates a digital/analog converter which converts the digital count information received from CNT2 into an analog voltage level supplied on the output APC2 to the adder ADD (FIG. 1).

Finally BT indicates a normal time base which generates the clock signal CK of period Tb.

In operation, during lock-up condition, the logic level of ALM blocks the output of the counter CNT2 at the value reached at the moment of relock-up. This has the effect of freezing the control voltage contribution APC2, and leaving only to the signal APC1 the actual control of the oscillator VCO. In the meantime the registers FF1 and FF2 are updated continually.

Upon activation of the signal ALM (onset of a loss of lock-up), the content of FF2 is frozen. At its output there is the measure of the reconstructed carrier frequency FO, which is also the carrier frequency received before loss of lock-up. The counter CNT2 is activated and, for the entire duration of the waiting time Ta, is controlled by the result of the comparison of CMP, expressed by the output logic level which changes quite rapidly following even small variations in frequency FO measured by CNT1.

CNT2 changes with equal rapidity the direction of counting.

If the loss of lock-up condition lasts for a period of time less than Ta (selective fading case), the output APC2 of DAC is then such as to hold the frequency FO generated by VCO very close to the value memorized at FF2.

At the end of the disturbance conditions, the value of the carrier frequency of the signal received s(t) will certainly be very close to that which it had immediately before the loss, no other appreciable variation factors (thermal drift) having intervened.

Under these conditions the demodulator locks-up immediately because the frequency FO is within the capture band Bc.

But if the release condition persists beyond the wait-time Ta, the counter CNT2 becomes independent; through the multiplexer MUX, its output tc is connected directly to the input u/d, allowing it to generate alternately up and down count sequences. At the output APC2 is generated a triangular wave form which, added to APC1, varies the frequency FO of the output of VCO in the entire search band Br. Upon cessation of the disturbance, lock-up of VCO takes place in a period of time which is necessarily longer than the above case.

Concerning the dimensioning of the two counters CNT1 and CNT2, i.e. determination of the values of n and m, the following may be stated.

The carrier frequency search step Fp depends on the number m of bits of CNT2 and on the range of variation of the carrier Br on the basis of the relation $Fp = Br/2^m$.

The frequencimetric resolution $\Delta f$ depends on the number of bits n of CNT1 and the nominal frequency fo of the carrier, on the basis of the relation $\Delta f = fo/2^n$. .

For correct operation of the device and hence for the dimensioning of m and n, there must be:

$$Bc > Fp > \Delta f$$

where Bc is the capture band.

To determine the period Tb of the time base BT so CNT will not exceed the full scale and at the same time utilize best the counter there should be:

$$2^{(n-1)} < Tb/To < 2^n \text{ , with } To = 1/fo.$$

## Claims

1. Automatic frequency control device for a local carrier generated by a voltage controlled oscillator, hereinafter referred to as "VCO", included in a phase locked loop, hereinafter referred to as "PLL", belonging to a coherent demodulator, preferably of the M-QAM type, the demodulator further comprising: means for detecting either short or long duration unlock conditions of the PLL and generating an unlock signal; adding means which sum up a phase error signal generated inside the PLL and controlling the VCO mainly during a PLL lock-up condition, to a second VCO control signal supplied by said automatic frequency control device and controlling the VCO mainly during a PLL unlock condition, characterized in that it comprises:

- measurement means (CNT1, FF1) of the oscillation frequency (FO) of said VCO;
- storage means (FF2) of said measurement, which hold a latest stored value when receiving said unlock signal (ALM);
- comparison means (CMP) of the outputs of said measurement means (CNT1, FF1) and said storage means (FF2);
- counting means (CNT2) activated only in presence of said unlock signal (ALM), which count up or down on the basis either of the logic level at the output of said comparison means (CMP), for a fixed wait time (Ta) following activation, or on the basis of a condition revealing the achievement of a maximum up or down counting capability, when the fixed wait time expires;
- synchronization means which generate a clock signal for the timing of said storage and counting means;

  whereby said fixed wait time (Ta) is related to said short duration unlock conditions;

  the counting carried out by said counting means (CNT2), after digital to analog conversion, becomes said second VCO control signal; and whereby a fast relock-up of said PLL is obtained in either said short or long duration unlock conditions.

**2.** Automatic frequency control device as in claim 1, characterized in that said measurement means comprise:

- a first n-bit counter (CNT1), reset by a clock signal (CK), which counts the periods of the oscillation frequency (FO) of said VCO applied at the clock input;
- a first n-cell register (FF1), synchronized by said clock signal (CK), which memorizes the counting supplied to it by said first counter (CNT1).

**3.** Automatic frequency control device as in claim 2, characterized in that said storage means consist of a second n-cell register (FF2) synchronized by said clock signal (CK), which memorizes said counting supplied by said first register (FF1) and freezes its content in presence of said unlock signal (ALM).

**4.** Automatic frequency control device as in claim 1, characterized in that said counting means comprise:

- a second counter (CNT2), of the up-down type, activated by said unlock signal (ALM), and clocked by said clock signal (CK), which supplies the counting which constitutes said second VCO control signal, and besides a terminal count signal (tc) whose logic level indicates the achievement of a maximum either up or down counting capability;
- a monostable circuit (MON), triggered by said unlock signal (ALM), which generates a fixed duration pulse corresponding to said fixed wait time (Ta);
- a multiplexer (MUX) controlled by said fixed duration pulse (Ta) in order to supply at an up/down counting control input (u/d) of said second counter (CNT2), either the output of said comparison means, during said fixed duration pulse (Ta), or said terminal count signal (tc) for the remaining time.

**5.** Automatic frequency control device as in claim 2, characterized in that between the period Tb of said clock signal (CK) and the nominal period To of said local generated carrier (FO) the following relation exists: $2^{(n-1)} < Tb/To < 2^{n}$, $\underline{n}$ being the number of bits of said first n-bit counter (CNT1).

**Patentansprüche**

**1.** Automatische Frequenzregelvorrichtung für einen lokalen Träger, der durch einen spannungsgesteuerten Oszillator erzeugt wird, der im folgenden als "VCO" bezeichnet wird und in einer Phasenregelschleife enthalten ist, die im folgenden als "PLL" bezeichnet wird und zu einem kohärenten Demodulator, vorzugsweise des Typs M-QAM gehört, wobei der Demodulator ferner folgendes umfaßt: Mittel zum Erkennen von Entriegelungszuständen der PLL entweder mit kurzer oder langer Dauer und zum Erzeugen eines Entriegelungssignals; ein Addiermittel, das ein Phasenfehlersignal, das in der PLL erzeugtwird und den VCO hauptsächlich während eines PLL-Verriegelungszustands steuert, zu einem zweiten VCO-Steuersignal, das durch die automatische Frequenzregelvorrichtung zugeführt wird und den VCO hauptsächlich während eines PLL-Entriegelungszustands steuert, aufsummiert, dadurch gekennzeichnet, daß sie folgendes umfaßt:

- Meßmittel (CNT1, FF1) der Oszillationsfrequenz (FO) des VCO;
- Speichermittel (FF2) der Messung, die einen letzten gespeicherten Wert beim Empfang des Entriegelungssignals (ALM) halten;
- Vergleichsmittel (CMP) der Ausgangssignale der Meßmittel (CNT1, FF1) und des Speichermittels (FF2);

- Zählmittel (CNT2), die nur beim Vorliegen des Entriegelungssignals (ALM) aktiviert werden, die auf der Grundlage entweder des Logikpegels am Ausgang des Vergleichsmittels (CMP) für eine feste Wartezeit (Ta) nach der Aktivierung oder auf der Grundlage eines Zustands, der die Erzielung einer maximalen Aufwärts- oder Abwärts-Zählfähigkeit, wenn die feste Wartezeit abläuft, offenlegt, aufwärts oder abwärts zählen;
- Synchronisierungsmittel, die ein Blocksignal zur Zeitsteuerung der Speicherungs- und Zählmittel erzeugen;

  wodurch die feste Wartezeit (Ta) mit den Entriegelungszuständen kurzer Dauer zusammenhängt; wodurch das durch die Zählmittel (CNT2) ausgeführte Zählen nach einer Digital/Analog-Umsetzung das zweite VCO-Steuersignal wird; und wodurch eine schnelle Neuverriegelung der PLL sowohl bei Entriegelungszuständen kurzer als auch langer Dauer erzielt wird.

**2.** Automatische Frequenzregelvorrichtung nach Anspruch 1, dadurch gekennzeichnet, daß die Meßmittel folgendes umfassen:

- einen ersten n-Bit-Zähler (CNT1), der durch ein Taktsignal (CK) zurückgesetzt wird, der die Perioden der Oszillationsfrequenz (FO) des VCO zählt, die an den Takteingang angelegt werden;
- ein erstes n-Zellen-Register (FF1), das durch das Taktsignal (CK) synchronisiert wird, das die ihm durch den ersten Zähler (CNT1) zugeführte Zählung speichert.

**3.** Automatische Frequenzregelvorrichtung nach Anspruch 2, dadurch gekennzeichnet, daß die Speichermittel aus einem zweiten n-Zellen-Register (FF2) bestehen, das durch das Taktsignal (CK) synchronisiert wird, das die durch das erste Register (FF1) zugeführte Zählung speichert und seinen Inhalt beim Vorliegen des Entriegelungssignals (ALM) einfriert.

**4.** Automatische Frequenzregelvorrichtung nach Anspruch 1, dadurch gekennzeichnet, daß die Zählmittel folgendes umfassen:

- einen zweiten Zähler (CNT2) des Aufwärts/Abwärts-Typs, der durch das Entriegelungssignal (ALM) aktiviert und durch das Taktsignal (CK) getaktet wird, der die Zählung, die das zweite VCO-Steuersignal bildet, zuführt, und daneben ein Ende-Zählsignal (tc), dessen Logikpegel die Erzielung eines Maximums entweder der Aufwärts- oder der Abwärts-Zählfähigkeit anzeigt;
- eine monostabile Schaltung (MON), die durch das Entriegelungssignal (ALM) ausgelöst wird, die einen Impuls fester Dauer erzeugt, der der festen Wartezeit (Ta) entspricht;
- einen Multiplexer (MUX), der durch den Impuls fester Dauer (Ta) gesteuert wird, um an einem Aufwärts/Abwärts-Zähisteuereingang (u/d) des zweiten Zählers (CNT2) entweder das Ausgangssignal der Vergleichsmittel während des Impulses fester Dauer (Ta) oder für den Rest der Zeit das End-Zählsignal (tc) zuzuführen.

**5.** Automatische Frequenzregelvorrichtung nach Anspruch 2, dadurch gekennzeichnet, daß zwischen der Periode Tb des Taktsignals (CK) und der nominalen Periode To o dem lokal erzeugten Träger (FO) die folgende Beziehung besteht: $2^{(n-1)} < Tb/To < 2^{n}$, wobei n die Anzahl von Bit des ersten n-Bit-Zählers (CNT1) ist.

## Revendications

**1.** Dispositif de commande automatique de fréquence d'une porteuse locale générée par un oscillateur commandé en tension, appelé ci-après "VCO" inclus dans une boucle à verrouillage de phase, appelée ci-après "PLL", appartenant à un démodulateur cohérent, de préférence du type de modulation d'amplitude en quadrature, le démodulateur comprenant en outre : des moyens pour détecter des conditions de déverrouillage de brève ou de longue durée de la PLL et générer un signal de déverrouillage ; des moyens d'addition qui additionnent un signal d'erreur de phase généré à l'intérieur de la PLL et commandant le VCO principalement durant une condition de verrouillage de PLL, à un deuxième signal de commande de VCO fourni par ledit dispositif de commande automatique de fréquence et commandant le VCO principalement durant une condition de déverrouillage de PLL, caractérisé en ce qu'il comprend :

- des moyens de mesure (CNT1, FF1) de la fréquence d'oscillation (FO) dudit VCO ;
- des moyens de mémorisation (FF2) de ladite mesure, qui détiennent la plus récente valeur mémorisée lors de la réception dudit signal de déverrouillage (ALM) ;
- des moyens de comparaison (CMP) des sorties desdits moyens de mesure (CNT1, FF1) et desdits moyens de mémorisation (FF2) ;
- des moyens de comptage (CNT2) activés uniquement en présence dudit signal de déverrouillage (ALM), qui comptent progressivement ou dégressivement soit en fonction du niveau logique à la sortie desdits moyens de comparaison (CMP), pendant un temps d'attente fixe (Ta) après leur activation, soit en fonction d'une condition révélant l'obtention d'une capacité de comptage progressif ou dégressif maximum, quand le temps d'attente fixe expire ;

- des moyens de synchronisation qui génèrent un signal de blocage pour la synchronisation desdits moyens de mémorisation et de comptage ;

par lequel ledit temps d'attente fixe (Ta) est lié auxdites conditions de déverrouillage de courte durée ; par lequel le comptage effectué par lesdits moyens de comptage (CNT2), après une conversion numérique/analogique, devient ledit deuxième signal de commande de VCO, et par lequel un reverrouillage rapide de ladite PLL est obtenu dans lesdites conditions de déverrouillage de courte ou de longue durée.

**2.** Dispositif de commande automatique de fréquence selon la revendication 1, caractérisé en ce que lesdits moyens de mesure comprennent :

- un premier compteur de n bits (CNT1), remis à zéro par un signal d'horloge (CK), qui compte les périodes de la fréquence d'oscillation (FO) dudit VCO appliquée à l'entrée d'horloge ;
- un premier registre de n cellules (FF1) synchronisé par ledit signal d'horloge (CK), qui mémorise le comptage qui lui est fourni par ledit premier compteur (ÇNT1).

**3.** Dispositif de commande automatique de fréquence selon la revendication 2, caractérisé en ce que lesdits moyens de mémorisation consistent en un deuxième registre de n cellules (FF2) synchronisé par ledit signal d'horloge (CK), qui mémorise ledit comptage fourni par ledit premier registre (FF1) et fige son contenu en présence dudit signal de déverrouillage (ALM).

**4.** Dispositif de commande automatique de fréquence selon la revendication 1, caractérisé en ce que lesdits moyens de comptage comprennent :

- un deuxième compteur (CNT2), du type progressif/dégressif, activé par ledit signal de déverrouillage (ALM) et cadencé par ledit signal d'horloge (CK), lequel fournit le comptage qui constitue ledit deuxième signal de commande VCO, et de plus un signal de compte terminal (tc) dont le niveau logique indique l'obtention d'une capacité de comptage progressif ou dégressif maximum ;
- un circuit monostable (MON), déclenché par ledit signal de déverrouillage (ALM), qui génère une impulsion de durée fixe correspondant audit temps d'attente fixe (Ta) ;
- un multiplexeur (MUX) commandé par ladite impulsion de durée fixe (Ta) afin de fournir au niveau d'une entrée de commande de comptage progressif/dégressif (u/d) dudit deuxième compteur (CNT2), soit la sortie desdits moyens de comparaison, durant ladite impulsion de durée fixe (Ta), soit ledit signal de compte terminal (tc) le reste du temps.

**5.** Dispositif de commande automatique de fréquence selon la revendication 2, caractérisé en ce qu'entre la période Tb dudit signal d'horloge (CK) et la période nominale To de ladite porteuse générée locale (FO) la relation suivante existe : $2^{(n-1)} < Tb/To < 2^{n}$, n étant le nombre de bits dudit premier compteur de n bits (CNT1).

M1
LPF1
BBP
Y
s(t)
DL
LPF2
M2
X
APC1
ALM
VCO
AFC
ADD
APC
APC2
FO

FIG. 1

AFC
MON
ALM
FF2
FF1
CNT1
FO
CK
CMP
BT
MUX
u/d
CNT2
tc
ALM
DAC
APC2

FIG. 2